# EUROPEAN PATENT APPLICATION

(11) **EP 1 630 267 A1**
(43) Date of publication of application: **01.03.2006**
(21) Application number: 05107201.5
(22) Date of filing: 04.08.2005
(51) Int. Cl.: D01F 11/08, D01F 6/60, D01F 6/62, D01F 6/14, B29D 30/40

(54) **Method of producing a reinforced rubber component**

(30) Priority: 10.08.2004 US 600707
(71) Applicant: THE GOODYEAR TIRE & RUBBER COMPANY, Akron, Ohio 44316-0001 (US)
(72) Inventor: Reuter, Rene Francois, L-9142, Burden (LU)
(74) Representative: Kutsch, Bernd

(57) **Abstract**

The present invention is directed to a method for producing a reinforced rubber component. The method comprises the steps of: melt spinning a thermoplastic polymer to produce a first stage monofilament (113); immediately after the step of melt spinning, quenching the first stage monofilament (113) in at least one liquid comprising an adhesive to produce a second stage monofilament (115) having said adhesive dispersed on a surface thereof; after said quenching, subjecting the second stage monofilament (115) to at least one additional step selected from the group consisting of drying, drawing, heat treating, and surface treating to produce a 2000 to 10,000 decitex monofilament; and contacting the 2000 to 10,0000 decitex monofilament with a rubber composition to form a reinforced rubber component.

## Description

### Background of the Invention

Thermoplastic monofilaments of heavy denier are commonly used as reinforcement in various rubber applications, including truck tires, agricultural belts, power transmission belt, and conveyor belts. Typically, the monofilaments are treated with adhesives to improve their adhesion to rubber. In the case of truck tires, several monofilaments in the form of a loosely woven fabric may be dipped in a resorcinol-formaldehyde latex (RFL) adhesive prior to use as a breaker belt. The monofilament fabric is taken from spools of approximately 3000 meters in length and run continuously through an RFL dipping process, followed by division of the dipped fabric into approximately 1000 meter rolls. The dipped fabric is then taken from the 1000 meter rolls to be calendered into a rubber compound for use in a tire.

The process of dipping the monofilament fabric leads to considerable waste of fabric during startup and shutdown of the process. In addition, continuous improvement in adhesion between rubber and monofilament is desirable owing to the ever more strenuous requirements for reinforced rubber applications. It would therefore be desirable to have an improved process for adhesive treating of thermoplastic monofilament, both to improve the efficiency of the treatment process as well as to obtain equal or superior adhesion of the monofilament to rubber compound.

### Summary of the Invention

The present invention is directed to a method for producing a reinforced rubber component according to claim 1. Dependent claims cover preferred embodiments of the invention.

### Brief Description of the Drawings

FIG. 1 is a schematic representation of a prior art process.
FIG. 2 is a schematic representation of one embodiment of the present invention.
FIG. 3 is a schematic plan view of an apparatus which can be used in one embodiment of the method of making monofilaments according to the invention;
FIG. 4 is a schematic plan view of an alternate apparatus which can be used in another embodiment of the method of making monofilaments according to the invention.

### Detailed Description of the Invention

Conventional methods for the production of thermoplastic monofilaments typical include melt spinning of the thermoplastic through an extruder and spinning head, followed by quenching the hot monofilament in a water bath. Exemplary methods are disclosed in US-A- 4,009,511; 5,223,187; 5,262,099; 5,518,670; 6,036,895; and 6,238,608. In all of these prior art methods, the thermoplastic monofilament is melt spun, water quenched, and subjected to further processing such as drawing, prior to treatment of the monofilament with an adhesive.

Thermoplastics suitable for melt-spinning and adhesive treatment according to the present method include polyamides, polyesters, and poly(vinyl alcohols). Included in the polyamides are nylon 6, nylon 66, nylon 612, among others. Included in the polyesters are polyethylene terephthalate and polyethylene naphthalate, among others.

Essentially all polyamides other than aromatic polyamides are melt spun. The process includes heating the polymer or polymer chips up to the softening/melting temperature of the polymer inside an extruder. Such extruders are for instance available from Reifenhäuser GmbH & Co KG Maschinenfabrik, Germany.

The nylon melt may contain stabilizers to prevent degradation by heat and light. The stabilizers added prior to polymerization are typically copper salts at 45 to 50 ppm Cu. Several organic or inorganic materials are known to act as synergistic costabilizers with copper salts, such as metal iodides, stannous salts, 2-amino-3,5-diiodobenzoic acid, 2-hydroxybenzothiazole, hydroxybenzimidazoles and 2-mercaptobenzomethylthiazole.

The molten polymer is delivered quickly as possible to a spinneret in precisely metered amounts to minimize size variation in the filaments thereby ensuring required filament performance.

The polymer may contain catalyst residues, additives which are precipitated and other particles which may clog the spinneret holes. The polymer may consequently be filtered and is subjected to shear in order to obtain melt homogeneity.

The polymer is pressed through spin-holes and thus forms monofilament filaments of a desired diameter. Conventional spinneret orifices are usually of circular shape. In many applications monofilaments with non-circular shape have become popular. Specific orifice shapes have been developed providing specific filament cross-sections. A further spinning method consist in fusing melt streams below the spinneret into a non-circular single filament. Hollow filaments may be produced by specific designs of the orifices, such as single or multiple orifice designs or by injecting gas into the filament during the melt stage.

Except for the shape of the spinneret orifice, the spinning equipment and process for production of modified cross-section filaments are similar to those providing round cross-section filaments though higher melt viscosity, lower polymer temperature and rapid quenching below the spinneret may favor specific cross-sections.

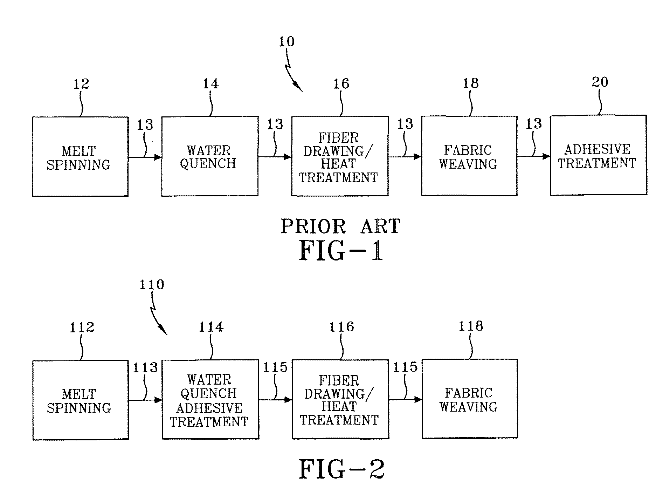

The typical prior art process 10 for monofilament production is illustrated in FIG. 1. As illustrated in FIG. 1, a thermoplastic monofilament 13 may be produced by melt spinning 12 the thermoplastic followed by water quench 14 to cool the monofilament. Subsequent treatment of the monofilament 13 may include fiber drawing/heat treatment 16 to orient and strengthen the monofilament 13. The monofilament 13 may be subjected to fabric weaving 18 to produce loose weave for use in pneumatic tires, for example. Alternatively, the monofilament 13 may be use singly or as multiple single monofilaments in an unwoven state. Significantly, adhesive treatment 20 in the prior art process occurs after fiber drawing, heat treatment and any weaving. Finally, the adhesive treated monofilament undergoes a rubber contacting (not shown) to produce a reinforced rubber component.

Whatever the shape of the filaments coming out of the spinneret they are quenched to lower temperature in a water bath, to avoid sticking to the machinery and then reheated to a suitable temperature 10-20 degree centigrade below the monofilament melting point and drawn to the final monofilament diameter, while increasing the polymer cristalline fraction versus the amorphous fraction. In the case of multifilament yarns the quenching is done by counterstream air-cooling and a finish is applied to avoid fretting of the adjacent filaments. The subsequent drawing process of monofilaments or multifilaments are similar. The draw ratio affects properties of the filaments such as tenacity and elongation. As draw ratio increases, the tenacity generally increases and the elongation decreases. Filaments for tire applications are usually subjected to higher drawing ratios. Tight process control is very important. A single end of yarn with different orientation, different heat treatment or change in moisture may lead to a streak in the final product

By contrast to the prior art process of FIG. 1, the process 110 of the present invention is illustrated in FIG. 2. As illustrated in FIG. 2, a thermoplastic monofilament may be produced by melt spinning 112. As opposed to the prior art method, preferably immediately after melt spinning the first stage monofilament 113 enters a combined quench/adhesive dip step 114. Step 114 provides both for heat transfer to quench the monofilament, and simultaneously provides for deposition of an appropriate adhesive onto the monofilament to enhance adhesion of the monofilament to a rubber compound. The second stage monofilament 115 having the adhesive deposited on it then may optionally be subjected to subsequent steps such as fiber drawing and heat treatment 116 and fabric weaving 118, followed by rubber contacting (not shown) to produce a reinforced rubber component. Other steps may also be done, including drying of the second stage monofilament to remove residual water or solvent from the adhesive dip step 114.

Thus, in a single treatment step, the monofilament is cooled down from the melt spinning temperature and coated using in an adhesive dip. Instead of using a water bath for quenching the freshly extruded monofilaments, the monofilament is cooled in an adhesive-dip-bath that will apply at the same time an adhesive to the surface of the monofilament to enable it to adhere to a rubber compound during the cure of a monofilament/rubber composite. This allows to have a non-stop production of dipped monofilaments on single bobbins, since full bobbins after the dipping/stretching process will be replaced by new empty bobbins as the line continues running. This presents a tremendous advantage over present techniques: first, the heat of the extruded monofilament is used to help the drying and reaction of the adhesive to the monofilament; second, there is no need to have a specific dip-unit line with the required dipping baths and heating zones; and third, the new process is continuous compared to a batch process of the traditional way.

A major advantage is that the treated monofilament can be purchased as ready-for-tire from a yarn spinner compared to the typical prior art method of
(A) spinning the monofilament;
(B) weaving a fabric of 1.50 meter width having a length of 3000 meters;
(C) dip the greige roll of fabric on the dip-unit and split it to transportable rolls of maximum 1000 meter rolls;
(D) calender the dipped fabric with the desired coat compound; and
(E) cut the coated fabric to size and angle for building into tires.

The process of the present invention requires only:
(A) spinning the monofilament while dipping/stretching it;
(B) coating the monofilaments with coat compound on a steel-cord calender; and
(C) cut to size and angle and build into tires.

Further advantages are energy savings and suppression of the water cooling unit.

The polymer filaments that may be treated according to the process 110 may be monofilaments as indicated hereinbefore. The polymer filaments may also be fused multifilaments as are known in the art, comprising two or more monofilaments fused together in a fusion step prior to quench (not shown). The quench/adhesive treatment step 114 is carried out in a liquid suitable as a heat transfer medium for the melt spun monofilament. Suitable liquids include water, silicon oils, and organic solvents that do not dissolve the thermoplastic. In one embodiment, the liquid is water.

The liquid used in the quench/adhesive treatment step 114 comprises an adhesive suitable for promoting adhesion between the thermoplastic monofilament and a rubber compound used in the reinforced rubber component. Suitable adhesives include those typically used in adhesive treatments for monofilaments, including epoxies, blocked isocyanates, resorcinol-formaldehyde condensates, and polymeric latexes. The adhesive may be in the form of a solution or a dispersion such as an aqueous latex.

In one embodiment, the first stage monofilament is dipped in an RFL liquid. In one embodiment, the RFL may include
(A) resorcinol,
(B) formaldehyde
(C) a polymer latex such as styrene-butadiene rubber latex and/or a vinylpyridine-styrene-butadiene terpolymer latex, and, optionally,
(D) a blocked isocyanate.

In more detail, a liquid may be used comprising an aqueous RFL solution having a styrene-butadiene-vinylpyridine latex and a blocked isocyanate.

The resorcinol reacts with formaldehyde to produce a resorcinol-formaldehyde reaction product. This reaction product is the result of a condensation reaction between a phenol group on the resorcinol and the aldehyde group on the formaldehyde. Resorcinol resoles and resorcinol-phenol resoles, whether formed in situ within the latex or formed separately in aqueous solution, are considerably superior to other condensation products in the adhesive mixture.

The resorcinol may be dissolved in water to which around 37 percent formaldehyde has been added together with a strong base such as sodium hydroxide. The strong base should generally constitute around 7.5 percent or less of the resorcinol, and the molar ratio of the formaldehyde to resorcinol should be in a range of from 1.5 to 2. The aqueous solution of the resole or condensation product or resin is mixed with the styrene-butadiene latex and vinylpyridine-styrene-butadiene terpolymer latex. The resole or other mentioned condensation product or materials that form said condensation product should constitute from 5 to 40 parts and preferably around 10 to 28 parts by solids of the latex mixture. The condensation product forming the resole or resole type resin forming materials should preferably be partially reacted or reacted so as to be only partially soluble in water. Sufficient water is then preferably added to give 12 percent to 28 percent by weight overall solids in the final dip. The weight ratio of the polymeric solids from the latex to the resorcinol/formaldehyde resin should be in a range of 2 to 6.

The RFL adhesive may also include a blocked isocyanate. In one embodiment from 1 to 8 parts by weight of solids of blocked isocyanate is added to the adhesive. The blocked isocyanate may be any suitable blocked isocyanate known to be used in RFL adhesive dips including, caprolactam blocked methylene-bis-(4-phenylisocyanate), such as Grilbond-IL6 available from EMS American Grilon, Inc., and phenol formaldehyde blocked isocyanates as disclosed in US-A- 3,226,276; 3,268,467; and 3,298,984. As a blocked isocyanate, use may be made of reaction products between one or more isocyanates and one or more kinds of isocyanate blocking agents. The isocyanates include monoisocyanates such as phenyl isocyanate, dichlorophenyl isocyanate and naphthalene monoisocyanate, diisocyanate such as tolylene diisocyanate, dianisidine diisocyanate, hexamethylene diisocyanate, m-phenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4diisocyanate, diphenylethane diisocyanate, 1,5-naphthalene diisocyanate, etc., and triisocyanates such as triphenylmethane triisocyanate, diphenylmethane triisocyanate, etc. The isocyanate-blocking agents include phenols such as phenol, cresol, and resorcinol, tertiary alcohols such as t-butanol and t-pentanol, aromatic amines such as diphenylamine, diphenylnaphthylamine and xylidine, ethyleneimines such as ethylene imine and propyleneimine, imides such as succinic acid imide, and phthalimide, lactams such as e.-caprolactam, δ-valerolactam, and butyrolactam, ureas such as urea and diethylene urea, oximes such as acetoxime, cyclohexanoxime, benzophenon oxime, and α-pyrolidon.

The polymers may be added in the form of a latex or otherwise. In one embodiment, a vinylpyridine-styrene-butadiene terpolymer latex and/or a styrene-butadiene rubber latex may be added to the RFL adhesive. The vinylpyridine-styrene-butadiene terpolymer may be present in the RFL adhesive such that the solids weight of vinylpyridine-styrene-butadiene terpolymer is from 50 percent to 100 percent of the solids weight of the styrene-butadiene rubber; in other words, the weight ratio of vinylpyridine-styrene-butadiene terpolymer to styrene-butadiene rubber is from 1 to 2.

It is normally preferable to first prepare the polymer latex and then add the partially condensed condensation product. However, the ingredients (the resorcinol and formaldehyde) can be added to the polymer latex in the uncondensed form and the entire condensation can then take place in situ. The latex tends to keep longer and be more stable if it is kept at an alkaline pH level.

In accordance with this invention, the nylon monofilament remains for 5 to 30 seconds in the RFL bath, is subsequently dried at a temperature within the range of 120°C to 240°C for several minutes and thereafter wound on a spool.

The drying step utilized will preferably be carried out by passing the monofilament through at least one and preferably two or more drying towers which are maintained at progressively higher temperatures.

For instance, it is preferred to dry the monofilament by passing it through a first drying tower, and exposing the monofilament to a temperature comprised between 120°C and 160°C and then to pass it through a second high temperature tower but which is maintained at a temperature within the range of 200°C and 240°C. The mentioned temperatures are tower temperatures; as the monofilaments have a low thermal capacity the heating up is immediate and almost uniform. The monofilament will preferably have a residence time in each drying tower within the range of 30 seconds to 120 seconds. For example, a residence time of 60 seconds in the first tower and 45 seconds in the second tower could be employed.

The quench/adhesive treatment step may include more than one adhesive treatment. For example, after melt spinning the first stage monofilament may be first quenched in an aqueous epoxy dispersion to provide for cool down and an epoxy coating, followed by a second dip in an RFL type dip. The step of quenching should have a residence time sufficient to allow deposition of the adhesive onto the monofilament.

As an epoxy, use may be made of reaction products between an aliphatic polyalcohol such as glycerine, propylene glycol, ethylene glycol, hexane triol, sorbitol, trimethylol propane, 3-methylpentanetriol, poly(ethylene glycol), poly(propylene glycol) etc. and a halohydrine such as epichlorohydrin, reaction products between an aromatic polyalcohol such as resorcinol, phenol, hydroquinoline, phloroglucinol bis(4-hydroxyphenyl)methane and a halohydrin, reaction products between a novolac type phenolic resin such as a novolac type phenolic resin, or a novolac type resorcinol resin and halohydrin. In one embodiment, the epoxy is derived from an ortho-cresol formaldehyde novolac resin.

The epoxy may be used as an aqueous dispersion of a fine particle polyepoxide. In one embodiment, the polyepoxide is present in the aqueous dispersion in a concentration range of from 1 to 5 percent by weight. In another embodiment, the polyepoxide is present in the aqueous dispersion in a concentration range of from 1 to 3 percent by weight.

In a first treatment step, dry polyester cord is dipped in the aqueous polyepoxide dispersion. The cord is dipped for a time sufficient to allow a dip pick up, or DPU, of between 0.3 and 0.7 percent by weight of polyepoxide. In another embodiment, the DPU is between 0.4 and 0.6 percent by weight. The DPU is defined as the dipped cord weight (after drying or curing of the dipped cord) minus the undipped cord weight, then divided by the undipped cord weight.

The polyester cord may be treated in the aqueous polyepoxide dispersion in a continuous process by drawing the cord through a dispersion bath, or by soaking the cord in batch. After dipping in the polyepoxide dispersion, the cord is dried or cured to remove the excess water, using methods as are known in the art.

It could be envisioned to submit other textile material and more specifically melt spun high tenacity fibers, having physical and chemical properties similar to those of nylon to similar process steps. Preferred would be in a first step, polyethylene terephthalate, polyethylene naphthalate.

In accordance with this invention, the nylon monofilament remains for 5 to 30 seconds in the RFL bath, is subsequently dried at a temperature within the range of 120°C to 240°C for several minutes and thereafter wound on a spool.

The drying step utilized will preferably be carried out by passing the monofilament through at least one and preferably two or more drying towers which are maintained at progressively higher temperatures.

For instance, it is preferred to dry the monofilament by passing it through a first drying tower, and exposing the monofilament to a temperature comprised between 120°C and 160°C and then to pass it through a second high temperature tower but which is maintained at a temperature within the range of 200°C and 240°C. The mentioned temperatures are tower temperatures; as the monofilaments have a low thermal capacity the heating up is immediate and almost uniform. The monofilament will preferably have a residence time in each drying tower within the range of 30 seconds to 120 seconds. For example, a residence time of 60 seconds in the first tower and 45 seconds in the second tower could be employed.

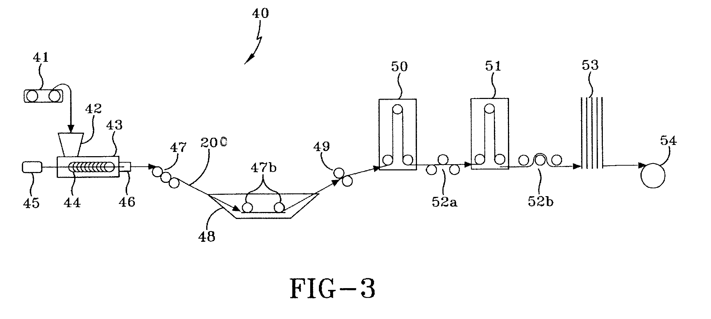

Fig. 3 shows a schematic plan view of equipment 40 which can be used for implementing the invention. The equipment includes a feeder 41 of polymer chips feeding a hopper 42, connected to a heated barrel 43 housing an extruder screw 44 driven by motor 45. The barrel 43 is divided into several heating and cooling zones. Heat is generated by electric, ceramic-insulated resistance heater bands. Cooling is effected by air or liquid. The barrel heats the nylon chips to a temperature of 20°C above their melting temperature. The extruder screw 44 squeezes the molten material through a spinneret 46 having usually one orifice. The extruded filament 200 is drawn by cylindrical rolls 47 out of spinneret head and guided into the RFL bath 48 wherein there are further rolls 47b. The distance from the spinneret head to the bath 48 and the speed of withdrawal are chosen such that the filament 200 cools down from a temperature of 300°C to 90°C. This distance ranges usually between 50 to 200 cm. The filament 200 should not have a temperature superior to 90°C when it enters the "quenching and dipping" RFL bath which has a temperature of at most 80°C and preferably comprised between 50 and 70°C. The RFL bath is temperature controlled (not shown) so as to keep the temperature stable and below 80°C.

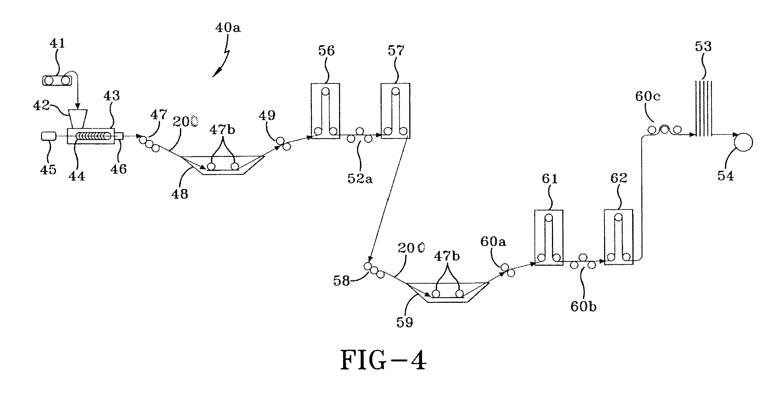

The filament 200 is drawn from the RFL bath 48 by pull rolls 49 and fed into the first drying tower 50. The rolls 47, 47b, 49 as well as further possibly required rolls may have grooves for guiding the filament with precision and guarantee a uniform cooling and a thorough exposure to the dipping fluid. From the first drying tower 50 exposing the filament to a temperature of 140 degrees Celsius, the filament is guided to a second tower 51 having a temperature of 200 degrees Celsius. In this second high temperature tower 51, the filament 200 is drawn in order to confer to it the required physical properties and more specifically the required tenacity. Tower 51 is followed by a set of pull rolls 52, a festoon 53 and a wind up unit 54. The wind-up speed in a typical apparatus as represented in Fig. 4 is determined by various factors as may be determined by one skilled in the art without undue experimentation.

Fig. 4 shows a schematic plan view of an alternate apparatus 40a which can be used for implementing the invention, wherein the same reference numbers refer to equipment pieces working in a comparable way. The apparatus 40a comprises two "quenching and dipping" RFL baths 48 and 59, which are preferably both temperature controlled. It is well known in the art that an RFL bath should contain between 15 and 26.5 percent of solid material, the rest being water. In the embodiment according to Fig. 5 it is preferred that the first bath 48 contains a lower concentration of solid material than the second bath 59. More specifically the first bath 48 should preferably have a concentration of solid material slightly above 15 percent and the second bath a concentration slightly below 26 percent.

Coming out of the first bath 48, the filament 200 is drawn through a pressurized steam chamber 56. Such is well known in the art and operates at steam pressures of 6 to 12 kg/cm2 and at temperatures of 180°C. The steam conditions are chosen so that the heat assists stretching, which results in orientation of the core of the filament. The steam enters the surface and deorients it, preventing the development of molecular orientation or birefringence in the surface as the filament is stretched. The monofilament 200 is orientation stretched at a ratio of at least 3.5x before entering heating tower 57 containing radiant heating elements at a temperature of 700 to 1300°C, where the filament is further stretched at a ratio of at least 1.3x. The filament cools down in the air to a temperature of 80°C, while being guided by the rolls 58, and enters subsequently the quenching and dipping bath 59.

The filaments are drawn from the RFL bath 59 by pull rolls 60a and fed into drying tower 61. From the drying tower 61 exposing the filaments to a temperature of 120 to 140°C, the filaments are guided by rolls 60b to a high temperature tower 62 having a temperature of 200 to 240°C. In the second high temperature tower 62, the filaments are only slightly stretched as compared to the drawing in tower 51 of Fig. 4. As in the first embodiment, tower 62 is followed by a set of pull rolls 60c, a festoon 53 and a wind up unit 54.

Though this second embodiment has double the quenching and heating steps there are advantages as to the coating quality and uniformity and the finished filaments have a higher tenacity.

In case the filaments do not require a higher tenacity than the one acquired in the steam chamber 56 and the heating tower 57 it is possible to do without the high temperature tower 62. Drying tower 61 is then followed by festoon 53 and a wind up unit 54. As the filament 200 coming out of bath 59 is not submitted to any temperature step above 200°C, the RFL bath should not contain any blocked isocyanate.

After treatment of the nylon monofilament, the treated monofilament may be incorporated into a reinforced rubber component with a rubber compound. The rubber composition may be applied by calendering the rubber onto one or more monofilaments as they pass over, around and through relatively large, heated, rotating, metal cylindrical rolls. Such methods are well known to those having skill in such art.

The rubber composition for use in a reinforced rubber component contains a cross-linked elastomer or rubber. Such rubber may be selected from the group consisting of ethylene alpha-olefin rubber, silicone rubber, polychloroprene, polybutadiene, epichlorohydrin, acrylonitrile rubber, hydrogenated acrylonitrile rubber, zinc salts of unsaturated carboxylic acid ester grafted hydrogenated nitrile butadiene elastomer, natural rubber, synthetic cis-1,4-polyisoprene, styrene-butadiene rubber, ethylene-vinyl-acetate copolymer, ethylene methacrylate copolymers and terpolymers, chlorinated polyethylene, chlorosulfonated polyethylene, alkylated chlorosulfonated polyethylene, trans-polyoctenamer, polyacrylic rubber, non-acrylated cis-1,4-polybutadiene, and mixtures thereof.

It is recognized that conventional compounding ingredients may be used in the preparation of a rubber composition. The rubber composition may be sulfur cured or peroxide cured. For example, the rubber composition may contain conventional additives including reinforcing agents, fillers, peptizing agents, pigments, stearic acid, accelerators, sulfur-vulcanizing agents, antiozonants, antioxidants, processing oils, activators, initiators, plasticizers, waxes, pre-vulcanization inhibitors, extender oils and the like. Representative of conventional accelerators may be, for example, amines, guanidines, thioureas, thiols, thiurams, sulfenamides, dithiocarbamates and xanthates which are typically added in amounts of from 0.2 to 3 phr. Representative of sulfur-vulcanizing agents include element sulfur (free sulfur) or sulfur donating vulcanizing agents, for example, an amine disulfide, polymeric polysulfide or sulfur olefin adducts. The amount of sulfur-vulcanizing agent will vary depending on the type of rubber and particular type of sulfur-vulcanizing agent but generally range from 0.1 phr to 3 phr with a range of from 0.5 phr to 2 phr being preferred. Representative of the antidegradants which may be in the rubber composition include monophenols, bisphenols, thiobisphenols, polyphenols, hydroquinone derivatives, phosphites, phosphate blends, thioesters, naphthylamines, diphenol amines as well as other diaryl amine derivatives, para-phenylene diamines, quinolines and blended amines. Antidegradants are generally used in an amount ranging from 0.1 phr to 10 phr with a range of from 2 to 6 phr being preferred. Amine-based antidegradants, however, are not preferred in the practice of this invention. Representative of a peptizing agent that may be used is pentachlorophenol which may be used in an amount ranging from 0.1 phr to 0.4 phr with a range of from 0.2 to 0.3 phr being preferred. Representative of processing oils which may be used in the rubber composition of the present invention include, for example, aliphatic, naphthenic and aromatic oils. The processing oils may be used in a conventional amount ranging from 0 to 30 phr with a range of from 5 to 15 phr being more usually preferred. Initiators are generally used in a conventional amount ranging from 1 to 4 phr with a range of from 2 to 3 phr being preferred. Conventional fillers such as carbon black and silica may be used in an amount ranging from 10 to 150 phr.

In the case of a sulfur cured rubber composition, accelerators may be used in a conventional amount. In cases where only a primary accelerator is used, the amounts range from 0.5 to 2 phr. In cases where combinations of two or more accelerators are used, the primary accelerator is generally used in amounts ranging from 0.5 to 1.5 phr and a secondary accelerator is used in amounts ranging from 0.1 to 0.5 phr. Combinations of accelerators have been known to produce a synergistic effect. Suitable types of conventional accelerators are amines, disulfides, guanidines, thioureas, thiazoles, thiurams, sulfenamides, dithiocarbamates and xanthates. Preferably, the primary accelerator is a sulfenamide. If a secondary accelerator is used, it is preferably a guanidine, dithiocarbamate or thiuram compound.

In the case of peroxide cured rubber composition, well known classes of peroxides may be used include diacyl peroxides, peroxyesters, dialkyl peroxides and peroxyketals. Typical amounts of peroxide ranges from 1 to 12 phr (based on active parts of peroxide). Preferably, the amount of peroxide ranges from 2 to 6 phr.

A co-agent may be present during the free radical crosslinking reaction. Representative examples include organic acrylates, organic methacrylates, divinyl esters, divinyl benzene, bis-maleimides, triallylcyanurates, polyalkyl ethers and esters, metal salts of an alpha-beta unsaturated organic acid and mixtures thereof. Generally speaking, the co-agent is present in an amount ranging from 0.1 to 40 phr.

A rubber component comprising the adhesive treated monofilament and rubber composition may be used in a variety of reinforced rubber articles. The monofilament reinforced rubber component may be part of a pneumatic tire, for example as in US-A- 5,743,975; as part of a conveyor belt, for example as in US-A- 6,427,728; as part of an agricultural belt, for example as in US-A-6,518,207; or as part of a power transmission belt, for example as in US-A-4,778,437.

## Claims

1. A method for producing a reinforced rubber component, **characterized by** the steps of:
melt spinning a thermoplastic polymer to produce a first stage monofilament (113);
after the step of melt spinning, preferably immediately after the step of melt spinning, quenching the first stage monofilament (113) in at least one liquid comprising an adhesive to produce a second stage monofilament (115) having said adhesive dispersed on a surface thereof;
after said quenching, subjecting the second stage monofilament to at least one additional step selected from the group consisting of drying, drawing, heat treating, and surface treating to produce a 2000 to 10,000 decitex monofilament; and
contacting the 2000 to 10,0000 decitex monofilament with a rubber composition to form the reinforced rubber component.

2. The method of claim 1, wherein the monofilament is a 4000 to 8000 decitex monofilament.

3. The method of claim 1 or 2, wherein the thermoplastic polymer is selected from the group consisting of polyamides, polyesters, and polyvinyl alcohols.

4. The method of claim 3, wherein the thermoplastic polymer is at least one polyamide selected from the group consisting of nylon 46, nylon 6, nylon 66, nylon 12, nylon 612.

5. The method of claim 3, wherein the thermoplastic polymer is at least one polyester selected from the group consisting of polyethylene terephthalate and polyethylene napthalate.

6. The method of at least one of the previous claims, wherein said at least one liquid comprises an adhesive selected from the group consisting of epoxies, resorcinol-formaldehyde, and blocked isocyanates, and polymer latexes.

7. The method of at least one of the previous claims, wherein said at least one liquid comprises an aqueous solution resorcinol-formaldehyde latex (RFL).

8. The method of at least one of the previous claims, wherein the at least one liquid is maintained at a temperature in a range of from 50 to 90°C.

9. The method of at least one of the previous claims, wherein said step of quenching has a residence time of from 5 to 30 seconds.

10. The method of at least one of the previous claims, wherein said reinforced rubber component is part of a rubber product selected from the group consisting of pneumatic tires, power transmission belts, agricultural belts, and conveyor belts.
